# EUROPEAN PATENT APPLICATION

(11) **EP 4 191 387 A1**
(43) Date of publication of application: **07.06.2023**
(21) Application number: 21851406.5
(22) Date of filing: 27.07.2021
(51) Int. Cl.: G06F 3/0354

(54) **FINGER WIRELESS MOUSE**

(30) Priority: 30.07.2020 KR 20200095003
(71) Applicant: Beyondplace Inc., Ulsan 44698 (KR)
(72) Inventor: LEE, Sang-Lok, Seoul 03983 (KR)
(74) Representative: Stöckeler, Ferdinand
(86) International application number: PCT/KR2021/009684
(87) International publication number: WO 2022/025579

(57) **Abstract**

A wireless finger mouse according to the present invention has a structure in which an assembly of a base plate and a button plate makes it possible for a multiplicity of mouse buttons to have only a planar configuration. Thus, the wireless finger mouse is easy to miniaturize, enhances high portability, and can be conveniently operated with a user's hand in a natural and comfortable state. That is, the wireless finger mouse can be operated in a state where the palm of the user's hand is brought into contact with a mouse pad or the like and thus where the tip of the user's finger is naturally seated on the mouse button. The user who uses a mouse in the related art feels less of a sensation of difference from the mouse in the related art, when using the wireless finger mouse. The wireless finger mouse maintains the same external functionality as the mouse in the related art. Thus, users of all ages can easily use the wireless finger mouse. The wireless finger mouse provides an increased visual design effect in keeping with a trend toward an emphasis on a design value of a device, as well as functions of the device.

## Description

### [Technical Field]

The present invention relates to a wireless finger mouse and, more particularly, to a wireless finger mouse that is capable of being decreased in size and weight in such a manner as to be used with the tips of a user's index, middle, ring, and little fingers being seated thereon.

### [Background Art]

Usually, a computer, a monitor, a keyboard, and the like that are to be connected to each other occupy a predetermined space. Thus, utilization of the occupied space is much decreased. Accordingly, for convenience and high mobility, in most cases, users who work in a narrow space or outdoor, use a portable computer, such as a notebook computer or a smart pad.

Considering a mobility feature, the portable computer has a pointing device, such as a touch pad or a track ball, instead of a mouse. However, the pointing device has a low level of precision and is inconvenient to use. Therefore, a wireless mouse has been developed to increase user convenience through connection to the portable computer and to overcome a spatial restriction while performing a precise operation.

Usually, a circuit element that transmits a wireless signal for operating a main body of the wireless mouse is mounted inside the wireless mouse and is small in volume. However, an external shape of the wireless mouse is designed to provide a user with a sensation of getting a grip on the wireless mouse. Due to this design, the wireless mouse inevitably employs a structure in which a large empty space is present therein.

A prototype of a current mouse for a computer was designed 40 years ago by Douglas Engelbart. Despite wide commercial application of the mouse, since then, there has been no significant change in the basic design of the mouse. This is in stark contrast with rapid advances in computer hardware and other peripheral devices over the same period. In addition to the above-mentioned consideration, a factor for a long life of the basic design is that there is no need to substantially learn how to use the mouse and that an intuitive interface substantially usable by users of all ages is employed. For this reason, the basic design has been used up to now.

Therefore, as is the case with a mobile terminal, there is a trend toward decreasing the size or weight of the mouse. However, it is not easy to decrease the size of the mouse while maintaining the above-mentioned intuitive interface and the like.

In order to solve this problem, a computer mouse peripheral and a small-sized finger mouse are disclosed in Korean Patent No. 10-1205023 and Korean Utility Model Publication No.20-0354523, respectively. However, these mouses in the related art have disadvantages, such as a low-level intuitive interface, a different design, and an unfamiliar operational method. In most cases, mouses in popular use still have an existing shape.

### [Disclosure]

### [Technical Problem]

An object of the present invention, which is made to solve the above-mentioned problems, is to provide a wireless finger mouse that has a decreased size, enhanced portability, and improved operational convenience, and provides less of a sensation of difference from a mouse in the related art while employing an intuitive interface and operational method.

### [Technical Solution]

According to an aspect of the present invention, there is provided a wireless finger mouse including: a base plate; and a button plate configured with a multiplicity of mouse buttons formed on the top of the base plate in such a manner that the tip of a user's finger is seated on the multiplicity of mouse buttons, wherein the multiplicity of mouse buttons are formed to be spaced a predetermined distance apart, by partition lines, along a lengthwise direction of the button plate from each other in such a manner that the tips of the user's selected fingers are seated on the multiplicity of mouse buttons, respectively, and that the multiplicity of mouse buttons are clicked or touched independently of each other.

In the wireless finger mouse, a combination of the base plate and the button plate configured with the multiplicity of mouse buttons may have a linear or semicircular shape of a predetermined length.

In the wireless finger mouse, a charging terminal may be installed on one side of the button plate.

In the wireless finger mouse, a seating portion on which the tip of the user's finger is seated may be formed on each of the multiplicity of mouse buttons, and the seating portion may be formed by concaving a center portion of an upper surface of the mouse button in such a manner as to be gradually curved and sequentially convexing front and rear portions of the upper surface of the mouse button in such a manner as to be curved more gradually toward the front end and the rear end, respectively.

In the wireless finger mouse, a scroll wheel is installed on one side of an upper surface of the button plate.

In the wireless finger mouse, a hand support on which the palm of the user's hand is seated may be detachably installed on one side of the button plate.

In the wireless finger mouse, a coupling groove may be formed in a vertical center portion of a front surface of the button plate in a manner that extends a predetermined distance inward therefrom along a lateral-surface direction of the button plate, and a coupling protrusion may be formed on a vertical center of a rear surface of the hand support in a manner that extends a predetermined distance outward therefrom along a lateral-surface direction of the hand support.

### [Advantageous Effects]

A wireless finger mouse according to the present invention provides the following advantageous effects because an assembly of a base plate and a button plate makes it possible for multiplicity of mouse buttons to have only a planar configuration.

First, the wireless finger mouse is easy to decrease in size and has enhanced portability.

Second, the wireless finger mouse provides the convenience of being operated with a user's hand in a natural and comfortable state.

Third, the user who uses the wireless finger mouse feels less of a sensation of difference from the mouse in the related art because the mouse button is operated in a state where the palm of the user's hand is brought into contact with a mouse pad or the like and thus where the tip of the user's finger is naturally seated on the mouse button.

Fourth, users of all ages can easily use the wireless finger mouse because an intuitive interface of an existing mouse is employed.

Fifth, the wireless finger mouse provides an increased visual design effect in keeping with a trend toward an emphasis on a design value of a device, as well as functions of the device.

### [Description of Drawings]

FIG. 1 is a perspective view illustrating a wireless finger mouse according to a first embodiment of the present invention.
FIG. 2 is a perspective view illustrating a wireless finger mouse according to a second embodiment of the present invention.
FIG. 3 is a perspective view illustrating a wireless finger mouse according to a third embodiment of the present invention.
FIG. 4 is a perspective view illustrating a wireless finger mouse according to a fourth embodiment of the present invention.
FIG. 5 is a perspective view illustrating a wireless finger mouse according to a fifth embodiment of the present invention.

### [Mode for Invention]

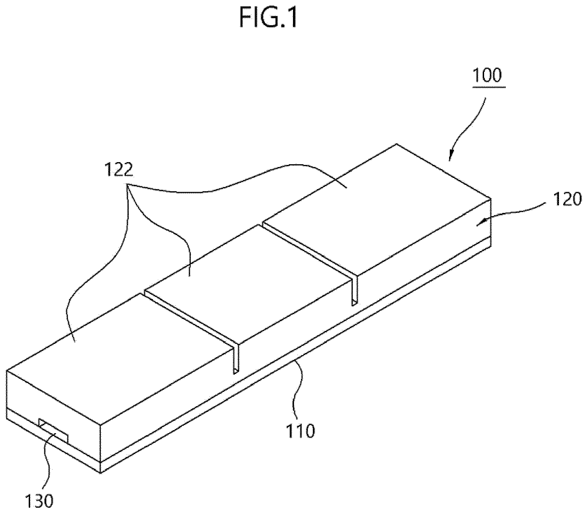

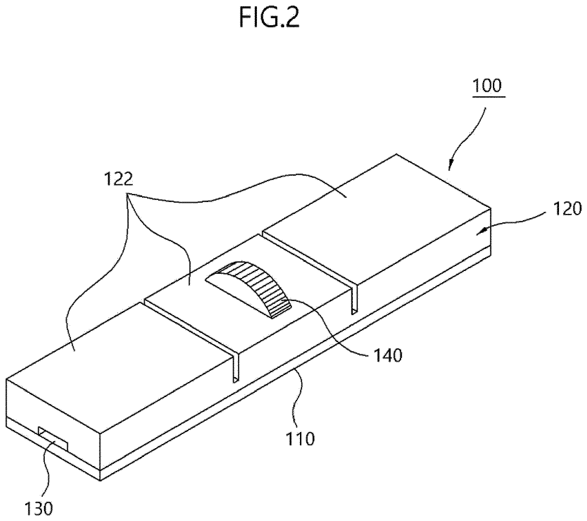

In order to provide a sufficient understanding of the present invention, preferred embodiments of the present invention will be described with reference to FIGS. 1 to 5. Various modifications may be made to the embodiment of the present invention, and the scope of the present invention should not be interpreted as being limited to the embodiments that will be described in detail below. Therefore, for emphasis on more definite description, a shape and the like of a constituent element may be illustrated in an exaggerated manner in the drawings. It should be noted that the same constituents illustrated in the drawings are given the same reference number. A detailed description of a known function and configuration, when determined as making the gist of present invention obfuscated, is omitted.

With reference to FIG. 1, a wireless finger mouse 100 according to the first embodiment of the present invention is configured to include a base plate 110, a button plate 120, and a charging terminal 130. The base plate 110 is elongated in a straight line and has a predetermined length. The button plate 120 is configured with a multiplicity of mouse buttons 122 that are formed on the top of the base plate 110 in such a manner that the tips of a user's fingers are seated on the multiplicity of mouse buttons 122, respectively. The charging terminal 130 is installed on one side of the button plate 120.

In this case, a circuit element that includes a Bluetooth chip, an optical sensor, and the like and a charging battery are built between the base plate 110 and the button plate 120 and are configured to be electrically connected to the mouse button 122 and the charging terminal 130.

The multiplicity of mouse buttons 122 are mechanically and electrically connected to the circuit element inside the wireless finger mouse 100 in such a manner that the tips of the user's fingers are seated on the multiplicity of mouse buttons 122, respectively, and thus that the multiplicity of mouse buttons 122 are clicked or touched independently of each other. It is preferred that the button plate 120 is partitioned into three or four mouse buttons 122 by partition lines that are formed in such a manner as to be spaced a predetermined distance apart from each other along a lengthwise direction of the button plate 120.

That is, in a case where three mouse buttons 122 are provided, the tips of the user's index, middle, and ring fingers may be seated on the three mouse buttons 122, respectively. In a case where four mouse buttons 122 are provided, the tips of the user's index, middle, ring, and little fingers may be seated on the four mouse buttons 122, respectively.

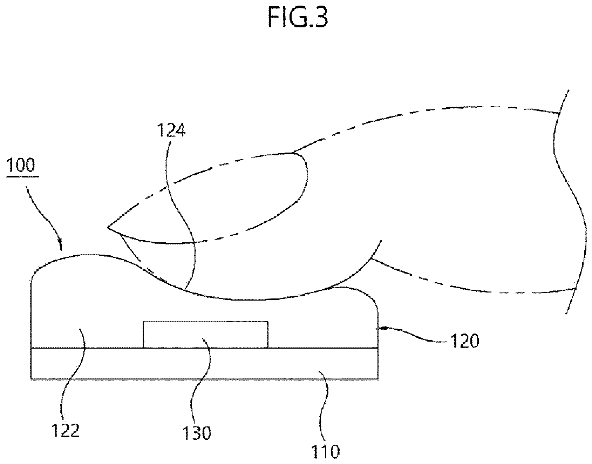

With reference to FIG. 3, in a wireless finger mouse 100 according to a second embodiment of the present disclosure, a seating portion 124 is formed on each of the multiplicity of mouse buttons 122. The seating portion 124 keeps the user's hand in a natural and comfortable state when the tip of the user's finger is seated thereon.

That is, the seating portion 124 is formed by concaving a center portion of an upper surface of the mouse button 122 in such a manner as to be gradually curved and sequentially convexing front and rear portions of the upper surface of the mouse button 122 in such a manner as to be curved more gradually toward the front end and the rear end, respectively.

With reference to FIG. 3, a wireless finger mouse 100 according to a third embodiment of the present invention is formed to have a semicircular shape of a predetermined length as a result of considering a difference in length between the user's fingers, when viewed from above.

That is, because a combination of the base plate 110 of the wireless finger mouse 100 and the button plate 120 configured with the multiplicity of mouse buttons 122 is semicircular, due to a difference in curvature among the multiplicity of mouse buttons 122, the middle mouse button is positioned more inward than the other adjacent mouse buttons.

At this point, among the multiplicity of mouse buttons 122, due to the difference in curvature, the middle mouse button 122 is positioned farther from the user than the other adjacent mouse buttons 122 in such a manner that the tip of the user's middle finger that is longer than the user's index and ring fingers is easily seated . Among the multiplicity of mouse buttons 122, due to the difference in curvature, the other adjacent mouse buttons 122 are positioned closer to the user than the middle mouse button 122 in such a manner that the tips of the user's index and ring fingers that are shorter than the user's middle finger are easily seated.

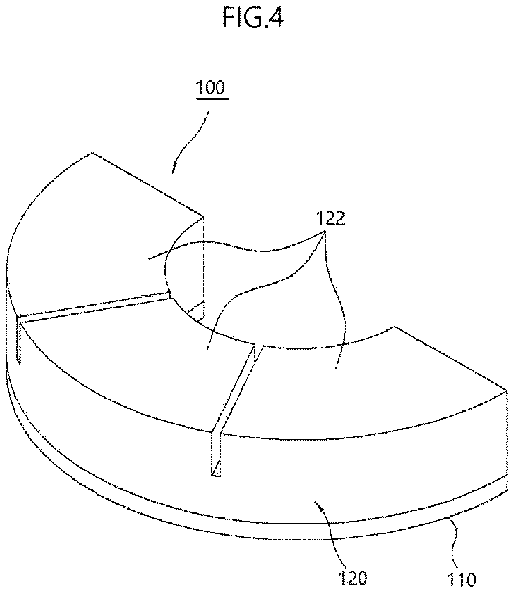

With reference to FIG. 4, a wireless finger mouse 100 according to a fourth embodiment of the present invention is configured to include the base plate 110, the button plate 120, the charging terminal 130, and a scroll wheel 140. The button plate 120 is configured with the multiplicity of mouse buttons 122 that are formed on the top of the base plate 110 in such a manner that the tips of the user's fingers are seated on the multiplicity of mouse buttons 122, respectively. The charging terminal 130 is installed on one side of the button plate 120. The scroll wheel 140 is installed on one side of the upper surface of the button plate 120.

That is, among the multiplicity of mouse buttons 122, the scroll wheel 140 is installed on a center portion of the middle mouse button 122, and is mechanically and electrically connected to the circuit element inside the wireless finger mouse 100.

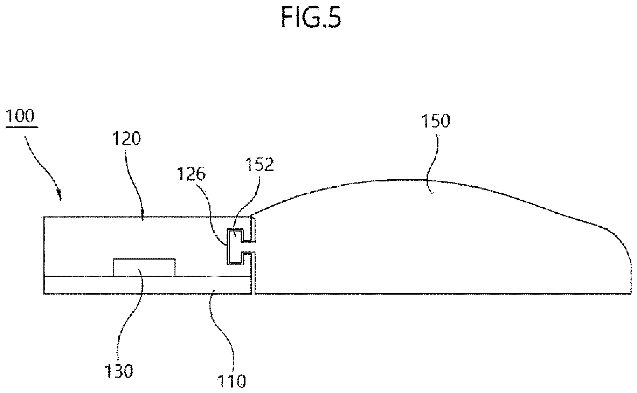

With reference to FIG. 5, a wireless finger mouse 100 according to a fifth embodiment of the present invention is configured to include the base plate 110, the button plate 120, the charging terminal 130, and a hand support 150. The button plate 120 is configured with the multiplicity of mouse buttons 122 that are formed on the top of the base plate 110 in such a manner that the tips of the user's fingers are seated on the multiplicity of mouse buttons 122, respectively. The charging terminal 130 is installed on one side of the button plate 120. The hand support 150 is detachably installed on one side of the button plate 120 and supports the palm of the user's hand in such a manner that the palm of the user's hand is seated on the hand support 150.

That is, a T-shaped coupling groove 126 is formed in a vertical center portion of a front surface of the button plate 120 in a manner that extends a predetermined distance inward therefrom along a lateral-surface direction of the button plate 120, and a T-shaped coupling protrusion 152 is formed on a vertical center portion of a rear surface of the hand support 150 in a manner that extends a predetermined distance outward therefrom along a lateral-surface direction of the hand support 150. The button plate 120 and the hand support 150 are coupled to each other by inserting the T-shaped coupling protrusion 150 into the T-shaped coupling groove 126 using respective concave and convex shapes of the coupling groove 126 and the coupling protrusion 150.

In the manner, the wireless finger mouse 100 according to the present invention has a structure in which an assembly of the base plate 110 and the button plate 120 makes it possible for the multiplicity of mouse buttons 122 to have only a planar configuration. Thus, the wireless finger mouse 100 is easy to miniaturize, enhances high portability, and can be conveniently operated with the user's hand in the natural and comfortable state. That is, the wireless finger mouse 100 can be operated in a state where the palm of the user's hand is brought into contact with a mouse pad or the like and thus where the tip of the user's finger is naturally seated on the mouse button 122. The user who uses a mouse in the related art feels less of a sensation of difference from the mouse in the related art when using the wireless finger mouse 100. The wireless finger mouse 100 maintains the same external functionality as the mouse in the related art. Thus, users of all ages can easily use the wireless finger mouse 100. The wireless finger mouse 100 provides an increased visual design effect in keeping with a trend toward emphasis on a design value of a device, as well as functions of the device.

The present invention is not limited to the embodiment described above. Various modifications and amendments may be made to the embodiment of the present invention without departing the gist and nature of the present invention.

### *Explanation of referenced numerals*

| | | | |
|---|---|---|---|
| 100: | wireless finger mouse | 110: | base plate |
| 120: | button plate | 122: | mouse button |
| 124: | seating portion | 126: | coupling groove |
| 130: | charging terminal | 140: | scroll wheel |
| 150: | hand support | 152: | coupling protrusion |

## Claims

1. A wireless finger mouse comprising:
a base plate; and
a button plate configured with a multiplicity of mouse buttons formed on the top of the base plate in such a manner that the tip of a user's finger is seated on the multiplicity of mouse buttons,
wherein the multiplicity of mouse buttons are formed to be spaced a predetermined distance apart, by partition lines, along a lengthwise direction of the button plate from each other in such a manner that the tips of the user's selected fingers are seated on the multiplicity of mouse buttons, respectively, and that the multiplicity of mouse buttons are clicked or touched independently of each other.

2. The wireless finger mouse of claim 1, wherein a combination of the base plate and the button plate configured with the multiplicity of mouse buttons has any one of linear and semicircular shapes of a predetermined length.

3. The wireless finger mouse of claim 2, wherein a charging terminal is installed on one side of the button plate.

4. The wireless finger mouse of claim 2, wherein a seating portion on which the tip of the user's finger is seated is formed on each of the multiplicity of mouse buttons, and the seating portion is formed by concaving a center portion of an upper surface of the mouse button in such a manner as to be gradually curved and sequentially convexing front and rear portions of the upper surface of the mouse button in such a manner as to be curved more gradually toward the front end and the rear end, respectively.

5. The wireless finger mouse of claim 1, wherein a scroll wheel is installed on one side of an upper surface of the button plate.

6. The wireless finger mouse of claim 1, wherein a hand support on which the palm of the user's hand is seated is detachably installed on one side of the button plate.

7. The wireless finger mouse of claim 6, wherein a coupling groove is formed in a vertical center portion of a front surface of the button plate in a manner that extends a predetermined distance inward therefrom along a lateral-surface direction of the button plate, and a coupling protrusion is formed on a vertical center of a rear surface of the hand support in a manner that extends a predetermined distance outward therefrom along a lateral-surface direction of the hand support.
